# EUROPEAN PATENT SPECIFICATION

(11) **EP 1 331 135 B1**
(45) Date of publication and mention of the grant of the patent: **21.11.2012**
(21) Application number: 03075225.7
(22) Date of filing: 22.01.2003
(51) Int. Cl.: B60Q 1/52, B60Q 1/32

(54) **Vehicle with warning system**
Warnungsystem für Fahrzeuge
Système d'alarme pour véhicule

(30) Priority: 23.01.2002 NL 1019818; 18.04.2002 NL 1020422
(43) Date of publication of application: 30.07.2003
(73) Proprietor: Van de Moosdijk, Robert Karel Gerard, 2034 SZ Haarlem (NL)
(72) Inventor: Van de Moosdijk, Robert Karel Gerard, 2034 SZ Haarlem (NL)
(74) Representative: Uittenbogaart, Gustaaf Adolf

(56) References cited:
- EP-A2- 0 227 607
- WO-A-96/22900
- DE-A- 10 020 985
- DE-A- 19 704 675
- DE-A- 19 835 601
- US-A- 5 428 512
- US-A- 5 497 304
- US-A- 6 133 851

## Description

The invention relates to a vehicle in accordance with the preamble of Claim 1. A vehicle of this type is generally known. When the known vehicle is in use, the drivers are always exposed to the risk that they will fail to notice other road users when changing road or lane. This is because the vehicle is large and the driver is usually sitting high above the road. Another problem is that the vehicle is generally long and is sometimes provided with a trailer or semi-trailer, and consequently the sideways movement of the vehicle is greater and the area where there are road users who can have problems is extra wide. The risk of the driver failing to notice other road users exists primarily if these other road users are on the other side of the vehicle from the side where the driver's position is located and if these other road users are relatively difficult to spot, as is the case with pedestrians and cyclists. However, it is precisely this group of road users who tend to be on the other side of the vehicle, and this is also the most vulnerable group of road users.

To reduce the risk of accidents involving this vulnerable group of road users, on the known vehicles there are mirrors which enable the driver, in countries where traffic drives on the right and the driver's position is on the left-hand side of the vehicle, to observe the part of the road on the right-hand side next to the vehicle via the mirrors and to check whether there are other road users in that area. This solution has the drawback that mirrors of this type generally provide only a limited view of the section of road to the right of the vehicle, and consequently the driver cannot always anticipate the expected behaviour of road users present in that area. Another drawback is that at dusk or in the dark, only road users with lights are visible, and consequently stationary cyclists and pedestrians are often not spotted. Also, the mirrors quickly become dirty, making it more difficult to see the area, and the mirrors do not cover the area just in front of the right-hand side of the vehicle.

One of the measures used to reduce the risk of accidents is for the other road users to be warned in a known way when the vehicle is changing road or lane by means of flashing direction-indicator lamps which are also visible from the side of the vehicle. Such an arrangement is known from US5497306. Direction-indicator lamps of this type are identical for both sides of the vehicle and for all traffic situations. The drawback of the known direction-indicator lamps is that in situations with increased risks they do not have any specific extra visibility, and consequently they do not give other road users sufficient warning.

To avoid the abovementioned drawbacks, the vehicle is designed in accordance with the characterizing clauses of Claim 1. As a result of additional warning means being fitted only to that side of the vehicle which is less visible to the driver, they will be given extra attention by the road users, and will show the road users on that side the potential risk when they are activated, while other road users, such as oncoming traffic, will not be deterred by the warning means. The warning means may therefore be designed in such a manner that they emit a stronger signal.

In practice, it has been found that accidents when the vehicle is changing road or lane occur primarily if the vehicle is travelling at a low speed. This is probably because lorries tend to corner at low speed. If accidents happen when changing lane, this mainly occurs when they are moving out into a queue of traffic, which also takes place at a low speed. If the warning means are not switched on at higher speeds, other road users are not unnecessarily distracted in straightforward situations, for example when approaching an exit slip road.

According to an improvement, the vehicle is designed in accordance with Claim 2. This prevents the warning means from being activated when the alarm device is switched on, for example during loading and unloading.

According to a further improvement, the device is designed in accordance with Claim 3. This makes the warning means a light signal which is noticeable even to those who are hard of hearing.

According to a further improvement, the device is designed in accordance with Claim 4. This gives a clear signal to the surrounding area and also means that the driver will hear that the warning means have been activated.

According to a further improvement, the device is designed in accordance with Claim 5. As a result, at night, when the light signal is in any case very visible indeed, the driver can switch off the acoustic signal, so that noise pollution is avoided.

According to a further improvement, the device is designed in accordance with Claim 6. This prevents the acoustic signal from inadvertently being left switched off after the vehicle has been driven at night.

The invention also comprises a warning method according to the preamble of Claim 7. Warning methods of this type are customary in the transport field and are designed in such a manner that, during standard use, they do not cause any disturbance to other road users. The result of this is that they are not noticed or are insufficiently noticed by the average road user in situations where extra care is important. To avoid this drawback, the device is designed in accordance with the characterizing clause of Claim 7. As a result, the warning means are activated when the vehicle is driving slowly, i.e. in situations when major changes in direction are to take place or when the situation is not straightforward. As a result of additional warning means being activated in precisely these situations when the direction of the vehicle is changing as described above, road safety is enhanced.

According to a further improvement, the warning method is designed in accordance with Claim 8. As a result, the warning system can also be used at night without noise pollution affecting the surrounding area.

According to a further improvement, the warning method is designed in accordance with Claim 9. This prevents the acoustic signal from inadvertently being left switched off after the vehicle has been driven at night.

The invention also comprises vehicle equipment according to claim 10. Accommodating the switching means in separate switching equipment means that they can easily be fitted into vehicles, with the result that the warning means and/or the warning method can easily be fitted applied in vehicles.

The invention is explained below with reference to a number of exemplary embodiments and with the aid of a drawing, in which:
Figure 1 shows a perspective view of a lorry equipped with a warning system, and
Figure 2 shows a diagrammatic overview of the warning system shown in Figure 1.

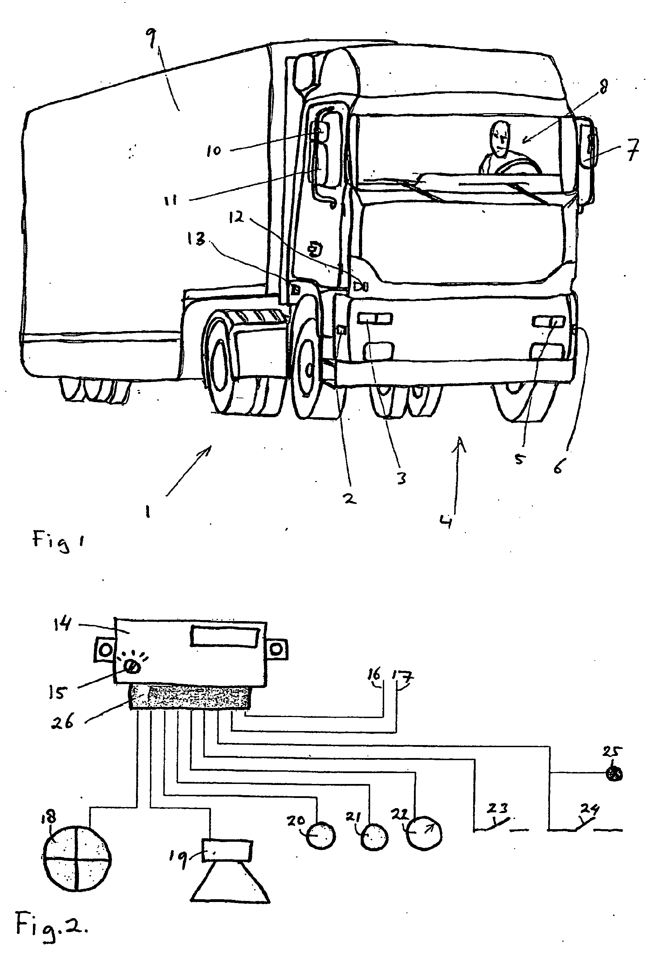

Figure 1 shows a vehicle 1 which is composed of a lorry 4 to which a semi-trailer 9 is coupled. On the left-hand side, the lorry 4 is provided with a driver's position 8. When sitting in the driver's position 8, the driver can see the road on the left-hand side and behind the vehicle 1 via a left-hand wing mirror 7 and can see the road on the right-hand side and behind the vehicle 1 via a right-hand wing mirror 11. Since the wing mirrors 7 and 11 are positioned at a high level and also cover the road behind the vehicle 1, it is not possible to use these mirrors 7 and 11 to look at the road next to the lorry 4.

By looking to his left, the driver can view the road next to the lorry 4 on the left-hand side, and by using a mirror 10 he can view the road on the right-hand side of the lorry 4. Because the driver is sitting at a high level, it is difficult for him to see the area just in front of the lorry 4 and in particular the area to the right-hand side of and in front of the lorry 4 is difficult to see. In practice, it has been found that when using the two mirrors 10 and 11 it is not always possible to notice all road users who are situated to the right-hand side of and/or just in front of the vehicle 1.

To improve this situation, the lorry 4 may be designed in such a manner that the mirrors 10 and/or 11 can be adjusted into two positions, in which case in the first position of the mirrors 10 and/or 11 the driver can see the part of the road which is usual during normal driving, and in the second position of the mirrors 10 and/or 11 the driver can see that part of the road where there may be road users who may be impeded when the lorry 4 and semi-trailer 9 is changing road lane. In the process, the mirror 11 is rotated, for example, eight degrees outwards and a few degrees downwards. If appropriate, the position of mirror 10 is adjusted accordingly.

The lorry 4 is provided with an ignition lock which can be switched on by the driver and by means of which control of the lorry 4 is switched on. The lorry 4 and the semi-trailer 9 are provided in a known way with direction indicators which can be switched on using a switch. On the front side, the lorry 4 is provided with a right-hand direction indicator 3 and a left-hand direction indicator 5, and on the right-hand side the lorry is provided with a right-hand direction indicator 2, and on the left-hand side the lorry is provided with a left-hand direction indicator 6. Left and right direction indicators are also arranged at the back of the lorry 4 and at the back of the semi-trailer 9. The direction indicators are provided in a known way with means which cause the lamps to start to flash after they have switched on. Furthermore, the lorry 4 is provided with an alarm device which ensures that, after this device has been switched on, the direction-indicator lamps start to flash all the way around, in order to alert other road users to an exceptional situation, for example to be switched on when the vehicle is stationary on the road.

To warn the road users who are driving or walking on the right-hand side of the lorry 4 when the right-hand direction indicator 2 or 3 is activated, a stroboscopic lamp 13, which is switched on in a manner which is to be described below, is positioned at the side of the lorry 4. After it has been switched on, this stroboscopic lamp 13 continuously emits short, bright flashes of light which can be seen from the entire side of the vehicle 1, the lamp being most visible from in front of and at the front side of the vehicle 1. The stroboscopic lamp 13 is provided with means, such as a cover and/or shield, or designed in such a manner that other road users are not blinded by the bright light. If appropriate, a plurality of stroboscopic lamps 13 may be arranged along the right-hand side of the vehicle 1.

At the same time as the stroboscopic lamp 13, an acoustic horn 12 can be activated, this acoustic horn 12 being arranged behind cladding on the right-hand front side of the lorry 4. After it has been activated, the acoustic horn 12 emits a high-pitch, two-tone sound which road users on the right-hand side of the vehicle can easily recognize. The driver, who is seated at the driver's position 8, can also hear the noise of the acoustic horn 12, so that he knows that the stroboscopic lamp 13 is also switched on. If appropriate, a plurality of acoustic horns 12 may be positioned along the right-hand side of the vehicle 1. Other sound sources, such as a bell, may also be used instead of a horn.

At the same time as the stroboscopic lamp 13 being switched on, it is also possible for the position of the mirrors 10 and/or 11 to be adjusted, so that the driver has a better view of road users who may be impeded when the vehicle is changing lane or road.

Figure 2 diagrammatically depicts switching equipment 14 and the connections by means of which the switching equipment 14 is connected to connections which are present in the lorry 4. In the exemplary embodiment shown, the switching equipment 14 is a separate unit, but it is also possible for the functions of this switching equipment 14 to be integrated in the control system which is present in the lorry 4.

The switching equipment 14 is connected to the control system and components of the lorry 4 via a plug connection 26. By means of a connection 16, the switching equipment 14 is connected to a power source, such as the 24-volt connection of a battery, and by means of a connection 17 the switching equipment 14 is connected to earth. Via a connection 20, the switching equipment 14 receives the signal that the left-hand direction indicator is switched on, and via a connection 21 the switching equipment 14 receives a signal that the right-hand direction indicator is switched on; if appropriate, these may be pulsed signals which match the flashing of the lamps of the direction indicators. If both connections 20 and 21 are activated simultaneously, the switching equipment 14 knows that the alarm device is switched on. In another embodiment, the alarm device may also emit a signal directly to the switching equipment 14 via the connection 20 after it has been switched on.

The lorry 4 is provided with a speedometer which, via a connection 22, emits a signal which is representative of the speed to the switching equipment 14. In the switching equipment 14, it is possible to detect whether the lorry 4 is travelling at a speed which is lower than a set value. This value can be set by means of an adjustment screw 15. By way of example, the adjustment screw 15 can be used to set a value between thirty and fifty kilometres per hour.

Via a connection 23, the switching equipment 14 receives a signal that the ignition lock has been switched on by the driver. This signal is used to switch the switching equipment 14 on and off. In the vicinity of the driver's position 8 there is a reset switch which emits a signal to the switching equipment 14 via a connection 24. This reset switch can be used to turn the acoustic horn 12 on or off. An indicator LED 25 is used to show whether or not the acoustic horn 12 is switched off. The driver will switch off the acoustic horn 12 if it is causing excessive noise pollution, for example at night. The standard setting is for the acoustic horn 12 to be switched on, and the switching equipment 14 is moved to the standard setting after the switching equipment 14 has been switched off and on using the ignition key.

The switching equipment 14 is programmed in such a manner that, if the speed of the lorry 4 is below the set value, when the right-hand direction indicator is activated, a connection 18 receives a signal, with the result that the stroboscopic lamp 13 is activated. When the alarm installation is activated, the stroboscopic lamp 13 is not activated. Also, a connection 19 will receive a signal, with the result that the acoustic horn 12 is activated. If appropriate, the driver can suppress activation of the acoustic horn 12 by actuating the reset switch. If the lorry 4 is provided with adjustable mirrors 10 and/or 11, they will adopt a different position when the stroboscopic lamp 13 is activated.

The exemplary embodiment has described a lorry 4 with a semi-trailer 9. It will be clear that the invention can also be used in a corresponding way for other vehicles in which the driver does not have a sufficiently clear view of other road users. Examples of other vehicles are buses, articulated lorries with trailers, lorry cabs, working vehicles, such as road sweepers, mobile cranes and delivery vans.

In the embodiment discussed, it has been assumed that the driver's position 8 is on the left-hand side of the vehicle 1. In that case, the driver has a less clear view of the area to the right-hand side of the vehicle, and consequently the stroboscopic lamp 13 and the acoustic horn 12 are arranged on that side. If the driver's position 8 is on the right-hand side of the vehicle 1, the stroboscopic lamp 13 and the acoustic horn 12 are, of course, arranged on the left-hand side.

## Claims

1. Vehicle, such as a truck or a bus, on a first side of the vehicle (1) provided with a driver's position (8) for a driver that has a contact switch (23) for switching on the vehicle and a speedometer (22) for measuring the speed of the vehicle, the vehicle also has signalling means with direction-indicator lamps (2, 3, 5, 6) and a first switch actuated by the driver, for indicating an intended change of lane or road of the moving vehicle, the vehicle also comprises warning means (12, 13) installed on a second side of the vehicle, along the side near to the front, **characterized in that** the vehicle comprises switching means (14) connected to the speedometer (22) that when the speed of the vehicle is lower than a settable speed activates the warning means after the driver activates the first switch for switching on the direction-indicator lamps on the second side.

2. Vehicle according to Claim 1 having an alarm device that may activate the direction-indicator lamps on both sides, the switching means being designed in such a manner that it only activates the warning means if the alarm device does not activate the direction-indicator lamps on both sides.

3. Vehicle according to one of the preceding claims, in which the warning means comprises a lamp (13) for emitting a light signal with short bright flashes.

4. Vehicle according to one of the preceding claims, in which the warning means comprises means (12) for emitting an acoustic signal which may be high-pitched and/or two-tone.

5. Vehicle according to Claim 4, having a second switch (24) actuated by the driver and connected to the switching means for blocking the acoustic signal.

6. Vehicle according to Claim 5, in which the switching means is designed in such a manner that the blocking of the acoustic signal is eliminated by actuation of the contact switch (23).

7. Method for warning road users of lane changes by a vehicle according to one of the preceding claims, using the warning means, such as a visual and/or acoustic signal, which warning means is switched on automatically by switching means when direction-indicator lamps are activated, **characterized in that** the switching means only switch on the warning means at a vehicle speed which is lower than a settable speed.

8. Method according to Claim 7, in which the warning means comprises acoustic and visual signals, and wherein the acoustic signals can be switched off.

9. Method according to Claim 8, in which each time the vehicle is switched on again, the use of the acoustic signals is switched on.

10. Vehicle equipment having switching means and warning means for use in a vehicle or in a method according to one of the preceding claims.

## Patentansprüche

1. Fahrzeug, wie beispielsweise ein Lkw oder ein Bus, wobei auf einer ersten Seite des Fahrzeugs (1) eine Fahrerposition (8) für einen Fahrer vorgesehen ist, an der sich ein Kontaktschalter (23) zum Einschalten des Fahrzeugs und ein Tachometer (22) zum Messen der Geschwindigkeit des Fahrzeugs befinden, wobei das Fahrzeug außerdem eine Signalgabeeinrichtung mit Blinkerlampen (2, 3, 5, 6) und einen durch den Fahrer betätigten ersten Schalter zum Anzeigen eines beabsichtigten Fahrspurwechsels oder Abbiegevorgangs des sich bewegenden Fahrzeugs aufweist, und wobei das Fahrzeug außerdem eine Warneinrichtung (12, 13) aufweist, die auf einer zweiten Seite des Fahrzeugs entlang der Seite in der Nähe der Vorderseite installiert ist;
**dadurch gekennzeichnet, dass**
das Fahrzeug eine mit dem Tachometer (22) verbundene Schalteinrichtung (14) aufweist, die, wenn die Geschwindigkeit des Fahrzeugs niedriger ist als eine festlegbare Geschwindigkeit, die Warneinrichtung aktiviert, nachdem der Fahrer den ersten Schalter zum Einschalten der Blinkerlampen auf der zweiten Seite aktiviert hat.

2. Fahrzeug nach Anspruch 1, mit einer Alarmvorrichtung, die dazu geeignet ist, die Blinkerlampen auf beiden Seiten zu aktivieren, wobei die Schalteinrichtung derart konfiguriert ist, dass sie die Warneinrichtung nur dann aktiviert, wenn die Alarmvorrichtung die Blinkerlampen auf beiden Seiten nicht aktiviert.

3. Fahrzeug nach einem der vorangehenden Ansprüche, wobei die Warneinrichtung eine Lampe (13) zum Aussenden eines Lichtsignals mit kurzen, hellen Blitzen aufweist.

4. Fahrzeug nach einem der vorangehenden Ansprüche, wobei die Warneinrichtung eine Einrichtung (12) zum Aussenden eines akustischen Signals aufweist, das ein Tonsignal mit einer hohen Tonhöhe und/oder ein Zweitonsignal sein kann.

5. Fahrzeug nach Anspruch 4, mit einem durch den Fahrer betätigten und mit der Schalteinrichtung verbundenen zweiten Schalter (24) zum Deaktivieren des akustischen Signals.

6. Fahrzeug nach Anspruch 5, wobei die Schalteinrichtung derart konfiguriert ist, dass das Deaktivieren des akustischen Signals durch Betätigen des Kontaktschalters (23) aufgehoben wird.

7. Verfahren zum Warnen von Verkehrsteilnehmern vor einem Fahrspurwechsel durch ein Fahrzeug nach einem der vorangehenden Ansprüche unter Verwendung der Warneinrichtung, die beispielsweise ein visuelles und/oder akustisches Signal ausgeben kann, wobei die Warneinrichtung durch die Schalteinrichtung automatisch eingeschaltet wird, wenn Blinkerlampen aktiviert werden;
**dadurch gekennzeichnet, dass**
die Schalteinrichtung die Warneinrichtung nur dann einschaltet, wenn die Fahrzeuggeschwindigkeit niedriger ist als eine festlegbare Geschwindigkeit.

8. Verfahren nach Anspruch 7, wobei die Warneinrichtung akustische und visuelle Signale ausgibt, und wobei die akustischen Signale ausgeschaltet werden können.

9. Verfahren nach Anspruch 8, wobei, immer wenn das Fahrzeug erneut eingeschaltet wird, die Verwendung der akustischen Signale aktiviert wird.

10. Fahrzeugausstattung mit einer Schalteinrichtung und einer Warneinrichtung zur Verwendung in einem Fahrzeug oder in einem Verfahren nach einem der vorangehenden Ansprüche.

## Revendications

1. Véhicule, tel qu'un camion ou un bus, lequel véhicule (1) étant doté, sur un premier côté de celui-ci, d'une position de conducteur (8) pour un conducteur qui a un commutateur de contact (23) pour mettre en service le véhicule et un tachymètre (22) pour mesurer la vitesse du véhicule, le véhicule ayant aussi des moyens de signalisation avec des lampes indicatrices de direction (2, 3, 5, 6) et un premier commutateur actionné par le conducteur, pour indiquer un changement prévu de voie ou de route du véhicule en déplacement, le véhicule comprenant aussi des moyens de signalisation (12, 13) installés sur un deuxième côté du véhicule, le long du côté près de l'avant, **caractérisé en ce que** le véhicule comprend des moyens de commutation (14) connectés au tachymètre (22) qui, lorsque la vitesse du véhicule est inférieure à une vitesse réglable, active les moyens de signalisation après que le conducteur a activé le premier commutateur pour allumer les lampes indicatrices de direction sur le deuxième côté.

2. Véhicule selon la revendication 1, ayant un dispositif d'alarme qui peut activer les lampes indicatrices de direction sur les deux côtés, les moyens de commutation étant conçus de manière à activer uniquement les moyens de signalisation si le dispositif d'alarme n'active pas les lampes indicatrices de direction sur les deux côtés.

3. Véhicule selon l'une quelconque des revendications précédentes, dans lequel les moyens de signalisation comprennent une lampe (13) pour émettre un signal lumineux avec des flashs brillants courts.

4. Véhicule selon l'une quelconque des revendications précédentes, dans lequel les moyens de signalisation comprennent des moyens (12) pour émettre un signal acoustique qui peut être aigu et/ou à deux tons.

5. Véhicule selon la revendication 4, ayant un deuxième commutateur (24) actionné par le conducteur et connecté aux moyens de commutation pour bloquer le signal acoustique.

6. Véhicule selon la revendication 5, dans lequel les moyens de commutation sont conçus de telle manière que le blocage du signal acoustique soit éliminé par actionnement du commutateur de contact (23).

7. Procédé pour avertir les usagers d'une route d'un changement de voie par un véhicule selon l'une quelconque des revendications précédentes, utilisant les moyens de signalisation, tels qu'un signal visuel et/ou acoustique, les moyens de signalisation étant mis en service automatiquement par des moyens de commutation quand des lampes indicatrices de direction sont activées, **caractérisé en ce que** les moyens de commutation mettent en marche seulement les moyens de signalisation à une vitesse de véhicule qui est inférieure à une vitesse réglable.

8. Procédé selon la revendication 7, dans lequel les moyens de signalisation comprennent des signaux acoustiques et visuels, et dans lesquels les signaux acoustiques peuvent être éteints.

9. Procédé selon la revendication 8, dans lequel, à chaque fois que le véhicule est mis en marche de nouveau, l'utilisation des signaux acoustiques est mise en marche.

10. Equipement de véhicule ayant des moyens de commutation et des moyens de signalisation pour utilisation dans un véhicule ou dans un procédé selon l'une quelconque des revendications précédentes.
